# FASCICULE DE BREVET EUROPEEN

(11) **EP 2 370 275 B1**
(45) Date de publication et mention de la délivrance du brevet: **03.04.2013**
(21) Numéro de dépôt: 09749146.8
(22) Date de dépôt: 13.11.2009
(51) Int. Cl.: B60C 15/04

(54) **PNEUMATIQUE AYANT UN BOURRELET PERFECTIONNE**
REIFEN MIT VERBESSERTER WULST
TYRE WITH IMPROVED BEAD

(30) Priorité: 27.11.2008 FR 0858047
(43) Date de publication de la demande: 05.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: GRISIN, Bopha, F-63200 Mozac (FR); VILLER, Jean-Marc, F-63200 Riom (FR)
(74) Mandataire: Randl, Oliver Georg
(86) Numéro de dépôt international: PCT/EP2009/065154
(87) Numéro de publication internationale: WO 2010/060815

(56) Documents cités:
- EP-A- 0 252 395
- US-A- 4 561 919
- US-B1- 6 820 670

## Description

### DOMAINE DE L'INVENTION

La présente invention concerne les pneumatiques, et en particulier les pneumatiques destinés à équiper des véhicules « poids lourd » de moyen ou fort tonnage, tels que des camions, des autobus ou des remorques.

### ARRIERE-PLAN

La plupart des pneumatiques, et notamment des pneumatiques destinés à équiper un véhicule de type « poids lourd », comprennent :
- un sommet comprenant une armature de sommet, surmontée, radialement vers l'extérieur, d'une bande de roulement dont la fonction est d'assurer le contact en roulage avec la chaussée ;
- deux flancs prolongeant le sommet radialement vers l'intérieur ;
- deux bourrelets radialement intérieurs aux flancs et comportant chacun au moins une structure annulaire de renforcement, souvent sous forme d'une tringle, les bourrelets étant destinés à coopérer avec une jante de montage du pneumatique ;
- une armature de carcasse comportant une pluralité d'éléments de renforcement, l'armature de carcasse étant ancrée dans chacun des bourrelets par un retournement autour de la structure annulaire de renforcement, de manière à former un « brin aller » s'étendant depuis le sommet à travers les flancs jusque dans le bourrelet, et un « brin retour » qui correspond à la partie retournée de l'armature de carcasse, le brin retour étant souvent axialement à l'extérieur du brin aller.

Les bourrelets du pneumatique sont des zones de forte sollicitation. Lorsque le pneumatique subit des efforts, l'armature de carcasse peut se déplacer par rapport à la tringle. Un contact entre l'armature de carcasse et la tringle peut conduire à une blessure voire même une cassure de l'armature de carcasse.

Le document US 6 820 670 propose une solution à ce problème, en plaçant un composite formé par un mélange caoutchouteux renforcé par des fibres entre la tringle et l'armature de carcasse.

Si cette solution procure une amélioration significative de l'endurance du bourrelet, elle laisse subsister un certain risque de déroulement de l'armature de carcasse. Par « déroulement » on entend ici le fait que l'armature de carcasse se désolidarise partiellement ou totalement d'au moins une des structures annulaires de renforcement autour desquelles elle est ancrée. Dans des cas extrêmes, ce déroulement peut conduire à une perte de pression voire un éclatement du pneumatique. Les dommages de déroulement de l'armature de carcasse sont liés aux actions combinées d'une forte sollicitation en torsion autour de la structure annulaire d'ancrage associée à une importante dégradation thermique des composants élastomériques du bourrelet dans cette zone entre la structure annulaire et l'armature de carcasse.

EP-A-252 395 est considéré comme l'état de la technique le plus proche.

### RESUME DE L'INVENTION

Un objectif de la présente invention est d'améliorer l'endurance du bourrelet d'un pneumatique destiné à équiper un véhicule « poids lourd » de moyen ou fort tonnage, et en particulier d'augmenter la résistance de ce bourrelet au déroulement de l'armature de carcasse.

Cet objectif est atteint par un pneumatique comportant :
un sommet comprenant une armature de sommet, surmontée d'une bande de roulement ;
deux flancs prolongeant le sommet radialement vers l'intérieur ;
deux bourrelets radialement intérieurs aux flancs et comportant chacun au moins une structure annulaire de renforcement ayant une dimension axiale maximale L;
une armature de carcasse ancrée dans chacun des bourrelets par un retournement autour de la structure annulaire de renforcement, de manière à former un brin aller s'étendant depuis le sommet à travers le flanc jusque dans le bourrelet, et un brin retour ;
une gomme de rembourrage entourant, dans toute coupe radiale, la structure annulaire de renforcement ;
une armature de contention pliée autour de l'ensemble formé par la structure annulaire de renforcement et la gomme de rembourrage, l'armature de contention étant située, dans toute coupe radiale, axialement entre le brin aller et le brin retour de l'armature de carcasse,
dans lequel, dans toute coupe radiale, lorsque le pneumatique est monté sur une jante appropriée et gonflé à sa pression de service :
   la section SE de l'ensemble formé par la structure annulaire de renforcement et la gomme de rembourrage est supérieure ou égale à 1.6 fois la section ST de la structure annulaire de renforcement ;
   la section SU de la portion de la gomme de rembourrage formée par les points de la portion de la gomme de rembourrage pour lesquels il existe au moins un point de la structure annulaire de renforcement ayant la même position axiale et une hauteur radiale inférieure, est supérieure ou égale à 20 % de la section ST de la structure annulaire de renforcement ;
   la section SD de la portion de la gomme de rembourrage formée par les points de la portion de la gomme de rembourrage pour lesquels il existe au moins un point de la structure annulaire de renforcement ayant la même position axiale et une hauteur radiale supérieure, est supérieure ou égale à 20 % de la section ST de la structure annulaire de renforcement ;
   la section SO de la portion de la gomme de rembourrage formée par les points de la portion de la gomme de rembourrage pour lesquels il existe au moins un point de la structure annulaire de renforcement ayant la même position radiale et se trouvant axialement à l'intérieur, est supérieure ou égale à 20 % de la section ST de la structure annulaire de renforcement ;
   la section SI de la portion de la gomme de rembourrage formée par les points de la portion de la gomme de rembourrage pour lesquels il existe au moins un point de la structure annulaire de renforcement ayant la même position radiale et se trouvant axialement à l'extérieur, est supérieure ou égale à 10 % de la section ST de la structure annulaire de renforcement.

L'armature de contention comporte une première portion d'armature de contention s'étendant du point radialement le plus à l'extérieur de l'armature de contention radialement vers l'intérieur, de manière à recouvrir au moins une partie de la gomme de rembourrage axialement à l'extérieur de la direction radiale passant par le point radialement le plus à l'extérieur de l'armature de contention, et une deuxième portion d'armature de contention s'étendant du point radialement le plus à l'extérieur de l'armature de contention radialement vers l'intérieur, de manière à recouvrir au moins une partie de la gomme de rembourrage axialement à l'intérieur de la direction radiale passant par le point radialement le plus à l'extérieur de l'armature de contention, la première et la deuxième portion d'armature de contention se rejoignant de sorte à former un recouvrement. De préférence, au moins une partie du recouvrement est radialement à l'intérieur de la structure annulaire de renforcement. Cette configuration a pour avantage d'améliorer le maintien du recouvrement en le situant dans une zone de serrage entre la structure annulaire de renforcement et la jante de montage sur laquelle le pneumatique est monté.

Un pneumatique selon l'invention permet d'améliorer en même temps : (1) l'endurance de l'armature de carcasse, en intercalant un « coussin » élastomérique dont le positionnement est rendu pérenne par l'armature de contention, et (2) la résistance du bourrelet au déroulement de l'armature de carcasse, par la répartition des efforts en torsion sur la gomme de rembourrage ainsi que par limitation du fluage des composants élastomériques du bourrelet résultant de leur dégradation thermique.

Selon un mode de réalisation avantageux, la section SU de la portion de la gomme de rembourrage formée par les points de la portion de la gomme de rembourrage pour lesquels il existe au moins un point de la structure annulaire de renforcement ayant la même position axiale et une hauteur radiale inférieure, est supérieure ou égale à 50 % de la section ST de la structure annulaire de renforcement. Ce type de réalisation correspond à l'augmentation du volume occupé par la gomme de rembourrage, au détriment du volume occupé par la structure annulaire de renforcement, qui est souvent plus rigide et plus dense que la gomme de rembourrage. Cela a pour avantage de réduire la masse du bourrelet tout en conservant une géométrie externe de l'ensemble formé par la tringle et la gomme de rembourrage qui facilite la flexion de l'armature de carcasse au cours du fonctionnement du pneumatique.

Selon un mode de réalisation avantageux, dans toute coupe radiale, les deux extrémités de la trace du recouvrement sont situées radialement à l'intérieur du point radialement le plus à l'extérieur de la structure annulaire de renforcement. Encore plus préférentiellement, dans toute coupe radiale, les deux extrémités de la trace du recouvrement sont situées radialement à l'intérieur du point radialement le plus à l'intérieur de la structure annulaire de renforcement. Les extrémités de renforts sont souvent source d'initiation de fissuration dans les composants élastomériques avoisinant. Ces types de réalisation permet de situer ces extrémités dans une zone de faible sollicitation.

Selon un mode de réalisation avantageux, la trace du recouvrement s'étend sur une longueur R entre deux extrémités, la longueur R satisfaisant à la condition U4 ≤ R ≤ 3L/2, et plus préférentiellement, à la condition à la condition L/2 ≤ R ≤ L. Ce mode de réalisation est un compromis judicieux pour obtenir une longueur R suffisante pour assurer un bon maintien des extrémités et pas trop longue pour faciliter le pliage autour de la structure annulaire de renforcement.

Selon un mode de réalisation avantageux, l'épaisseur radiale moyenne des sections SU et SD et l'épaisseur axiale moyenne des sections SI et SO sont supérieures à 2 mm. Il peut être avantageux de prévoir que l'épaisseur radiale moyenne de la section SU est supérieure à 4 mm, de manière à assurer une protection efficace entre la structure annulaire d'une part et le renfort de contention et l'armature de carcasse d'autre part.

Selon un mode de réalisation préférentiel, l'épaisseur radiale minimale des sections SU et SD et l'épaisseur axiale minimale des sections SI et SO sont supérieures à 0.5 mm. Ainsi on évite tout contact entre la structure annulaire d'une part et le renfort de contention et l'armature de carcasse d'autre part.

Selon un mode de réalisation avantageux, dans la zone de recouvrement, à chaque position axiale, la deuxième portion d'armature de contention est radialement à l'extérieur de la première portion d'armature de contention. Dans cette configuration, l'armature de carcasse du pneumatique en cours de roulage génère des sollicitations sur le renfort de contention qui tendent à préserver le maintien du recouvrement.

Préférentiellement, l'armature de contention pliée autour de l'ensemble formé par la structure annulaire de renforcement et la gomme de rembourrage comporte au moins une pluralité d'éléments de renforcement filaires parallèles les uns aux autres et formant un angle alpha avec la direction circonférentielle, alpha étant supérieur ou égal à 45° et inférieur ou égal à 90°, plus préférentiellement, supérieur ou égal à 65° et inférieur ou égal à 90°, et encore plus préférentiellement, supérieur ou égal à 80° et inférieur ou égal à 90°. L'armature ayant cette caractéristique présente l'avantage d'avoir un fort module d'extension dans le sens de plus forte sollicitation.

Les caractéristiques d'un pneumatique selon l'invention sont avantageusement mises en oeuvre dans un pneumatique adapté pour être monté sur une jante à seat incliné. En effet, ces pneumatiques à plus faible rapport d'aspect (H/B) possèdent des longueurs de retournement d'armature de carcasse plus courtes ce qui les sensibilise au dommage de déroulement.

Bien entendu, il est possible de combiner deux ou plusieurs modes de réalisation de l'invention pour optimiser la résistance au déroulement du bourrelet.

### BREVE DESCRIPTION DES DESSINS

La figure 1 représente schématiquement un pneumatique selon l'art antérieur.

La figure 2 représente schématiquement une vue en perspective partielle d'un pneumatique selon l'art antérieur.

La figure 3 représente, en coupe radiale, un quart d'un pneumatique selon l'art antérieur.

La figure 4 illustre comment la hauteur H d'un pneumatique est déterminée.

La figure 5 représente, en coupe radiale, un bourrelet d'un pneumatique selon l'art antérieur.

La figure 6 représente, en coupe radiale, un bourrelet d'un pneumatique selon l'invention.

Les figures 7A à 7C illustrent la détermination de la section de la structure annulaire de renforcement lorsque celle-ci est formée par une pluralité de fils enrobés.

Les figures 8A à 8E illustrent différentes sections citées dans la définition d'un pneumatique selon l'invention.

La figure 9 correspond à un détail de la figure 6.

La figure 10 illustre la notion de « trace du recouvrement ».

Les figures 11 et 12 illustrent le pliage et le tire-bouchonnage de l'armature de contention autour de l'ensemble formé par la structure annulaire de renforcement et la gomme de rembourrage.

### DESCRIPTION DETAILLEE DES DESSINS

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur du point B) s'il est plus près de l'axe de rotation du pneumatique que le point B. Inversement, un point C est dit « radialement extérieur à » un point E (ou « radialement à l'extérieur » du point E) s'il est plus éloigné de l'axe de rotation du pneumatique que le point E. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point E est dit « axialement intérieur à un point F (ou « axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H. Le « plan médian » du pneumatique est le plan qui est normal à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Deux éléments de renforcement sont dits « parallèles » dans ce document lorsque l'angle formé entre les deux éléments est inférieur ou égal à 20°.

Dans le cadre de ce document, l'expression « composition caoutchouteuse » désigne une composition de caoutchouc comportant au moins un élastomère et une charge.

Par « bande de roulement » pour pneumatique, on entend une quantité de composition caoutchouteuse, délimitée par deux surfaces principales dont une est destinée à entrer en contact avec le sol lorsque le pneumatique roule, et par des surfaces latérales.

Par « surface intérieure du pneumatique » on entend ici la surface du pneumatique qui est destinée à être en contact avec le gaz de gonflage lorsque le pneumatique est monté sur une jante et gonflé.

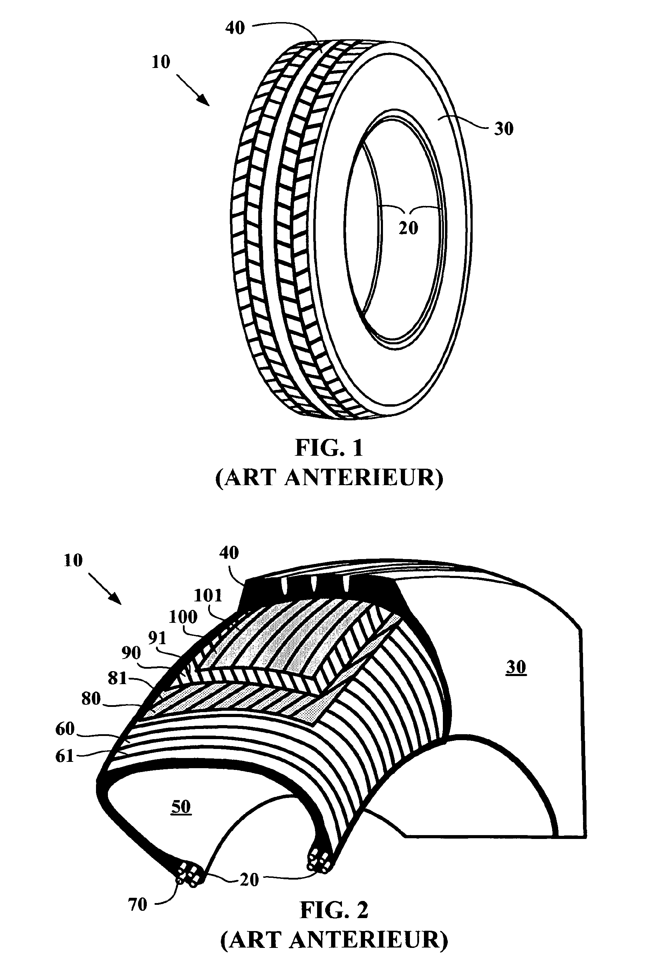

La figure 1 représente schématiquement un pneumatique tubeless 10 selon l'art antérieur. Le pneumatique 10 comporte un sommet comprenant une armature de sommet (invisible à la figure 1) surmontée d'une bande de roulement 40, ainsi que deux flancs 30 prolongeant le sommet radialement vers l'intérieur, deux bourrelets 20 radialement intérieurs aux flancs 30.

La figure 2 représente une vue en perspective partielle d'un autre pneumatique tubeless 10 selon l'art antérieur et illustre les différentes composantes du pneumatique. Le pneumatique 10 comprend une « gomme intérieure » 50 en composition caoutchouteuse imperméable au gaz de gonflage, recouvrant la surface intérieure du pneumatique 10, une armature de carcasse 60 constituée de fils 61 enrobés de mélange caoutchouteux, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70 °. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route.

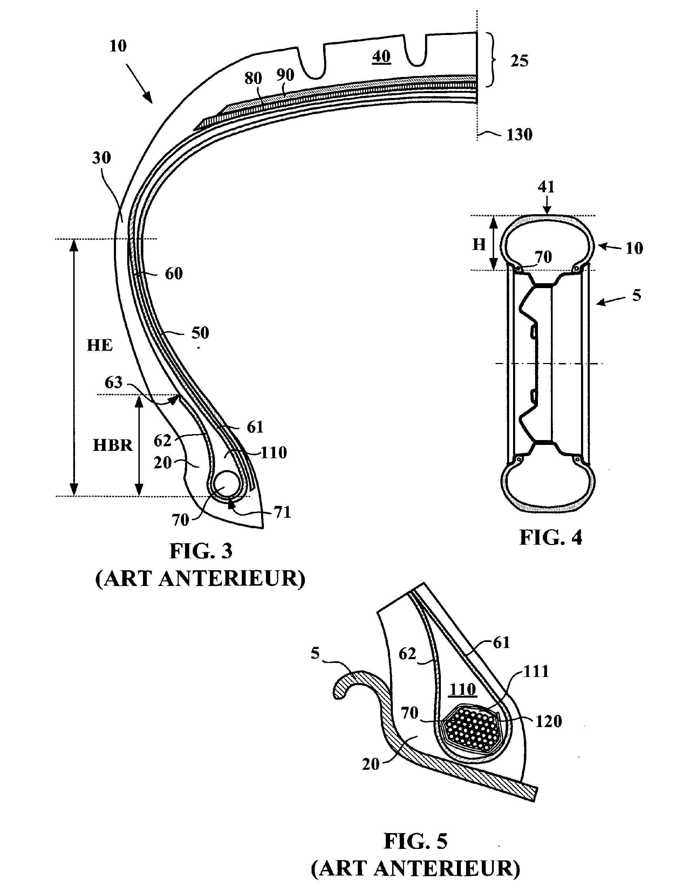

La figure 3 représente schématiquement, en coupe radiale, un quart d'un pneumatique 10 selon l'art antérieur. Le pneumatique 10 comporte deux bourrelets 20 destinés à entrer en contact avec une jante de montage (non représentée), chaque bourrelet 20 comportant au une structure annulaire de renforcement, en l'occurrence une tringle 70. Deux flancs 30 prolongent les bourrelets 20 radialement vers l'extérieur et s'unissent dans un sommet 25 comprenant une armature de sommet formée d'une première couche de renforts 80 et d'une deuxième couche de renforts 90, et surmontée radialement d'une bande de roulement 40. Chaque couche de renforts comprend des renforts filaires, enrobés dans une matrice formée de mélange caoutchouteux. Les renforts de chaque couche de renforts sont substantiellement parallèles entre eux ; les renforts des deux couches sont croisés d'une couche à l'autre selon un angle d'environ 20°, comme cela est bien connu de la personne du métier pour les pneumatiques dits radiaux.

Le pneumatique 10 comporte encore une armature de carcasse 60 qui s'étend depuis les bourrelets 20 à travers les flancs 30 jusqu'au sommet 25. Cette armature de carcasse 60 comporte ici des renforts filaires orientés substantiellement radialement, c'est-à-dire faisant avec la direction circonférentielle un angle supérieur ou égal à 65° et inférieur ou égal à 90°.

L'armature de carcasse 60 comporte une pluralité d'éléments de renforcement de carcasse et étant ancrée dans les deux bourrelets 20 par un retournement autour de la tringle 70, de manière à former dans chaque bourrelet un brin aller 61 et un brin retour 62. Le brin retour s'étend radialement à l'extérieur jusqu'à une extrémité 63 située à une distance radiale HBR du point 71 radialement le plus à l'intérieur de la structure annulaire de renforcement du bourrelet. HE désigne la distance radiale de l'équateur du point 71 radialement le plus à l'intérieur de la structure annulaire de renforcement du bourrelet. Par « équateur » du pneumatique on entend, dans le cadre du présent document, la hauteur radiale du point de la plus grande extension axiale de l'armature de carcasse lorsque le pneumatique est monté sur une jante et gonflé à sa pression de service.

La « hauteur radiale » H d'un pneumatique est définie comme la distance radiale entre le point 71 radialement le plus à l'intérieur de la structure annulaire de renforcement 70 du bourrelet 20 et le point 41 (figure 4) radialement le plus à l'extérieur de la bande de roulement 40 lorsque le pneumatique 10 est monté sur une jante de montage 5 (comme cela est représenté à la figure 4) et gonflé à sa pression de service.

Chaque bourrelet comporte en outre un bourrage 110, le bourrage étant situé radialement à l'extérieur de la tringle 70 et, pour une bonne partie, entre le brin aller 61 et le brin retour 62 de l'armature de carcasse 60.

La figure 5 représente, en section radiale, un bourrelet de pneumatique de l'art antérieur, tel que divulgué dans le document US 6 820 670. Le bourrelet 20, qui est adapté pour montage sur une jante 5 à seat incliné) comprend une structure annulaire de renforcement 70 formée par une pluralité de fils métalliques circonférentiels. L'armature de carcasse est ancrée dans le bourrelet 20 par un retournement autour de la structure annulaire de renforcement 70, de manière à former un brin aller 61 s'étendant depuis le sommet à travers le flanc jusque dans le bourrelet, et un brin retour 62. Une armature de contention 120 enveloppe l'ensemble formé par la structure annulaire de renforcement 70 et une certaine quantité 111 de gomme dont la dureté est supérieure à celle de la gomme de rembourrage 110. L'armature de contention 120 est située axialement entre le brin aller 61 et le brin retour 62 de l'armature de carcasse. Le document US 6 820 670 reste silencieux par rapport à manière dont l'armature de contention 120 est appliquée autour de l'ensemble formé par la structure annulaire de renforcement 70 et une certaine quantité 111 de gomme, mais le fait qu'elle est enroulée à plus d'une reprise autour de la tringle suggère une structure tire-bouchonnée et non pas pliée.

Un tel bourrelet possède une bonne endurance, mais l'expérience montre qu'il laisse subsister un certain risque de déroulement de l'armature de carcasse. Ainsi, la rigidification de la structure annulaire de renforcement par ce type de solution peut même conduire à augmenter les efforts de cisaillement dans les composants élastomériques situés entre cette structure et l'armature de carcasse.

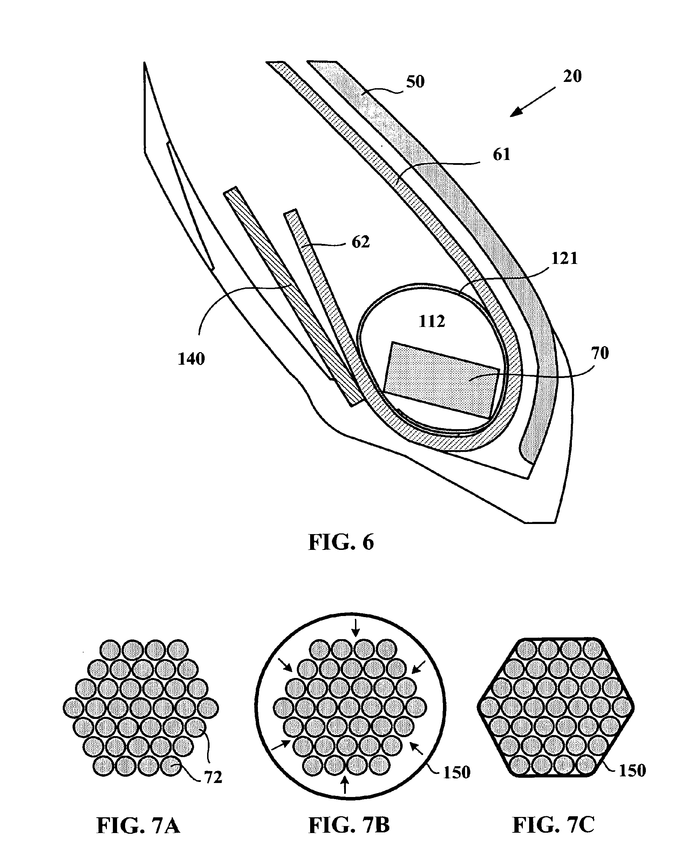

La figure 6 représente, en section radiale, un bourrelet 20 d'un pneumatique selon l'invention, adapté pour montage sur une jante à seat incliné (non représentée). Le bourrelet 20 comprend une tringle 70. L'armature de carcasse est ancrée dans le bourrelet 20 par un retournement autour de la tringle 70, de manière à former un brin aller 61 s'étendant depuis le sommet à travers le flanc jusque dans le bourrelet, et un brin retour 62. Une quantité de composition caoutchouteuse, habituellement désignée par le terme « gomme de rembourrage » 112 entoure la tringle 70. La gomme de rembourrage 112 « entoure » la tringle 70 lorsqu'il y a des portions de mélange caoutchouteux à la fois radialement à l'intérieur et radialement à l'extérieur ainsi que axialement à l'intérieur et axialement à l'extérieur de la tringle 70. La notion d' « entourer » ne signifie pas nécessairement que la gomme de rembourrage recouvre la totalité de la surface de la tringle, mais elle inclut ce cas de figure avantageux. Le pneumatique comporte en outre un renfort supplémentaire 140 dit « raidisseur ». Ce renfort, qui protège le bourrelet contre des agressions et limite la déradialisation de l'armature de carcasse dans la zone de contact du pneumatique avec le sol, ne correspond pas pour autant à une caractéristique essentielle d'un pneumatique selon l'invention.

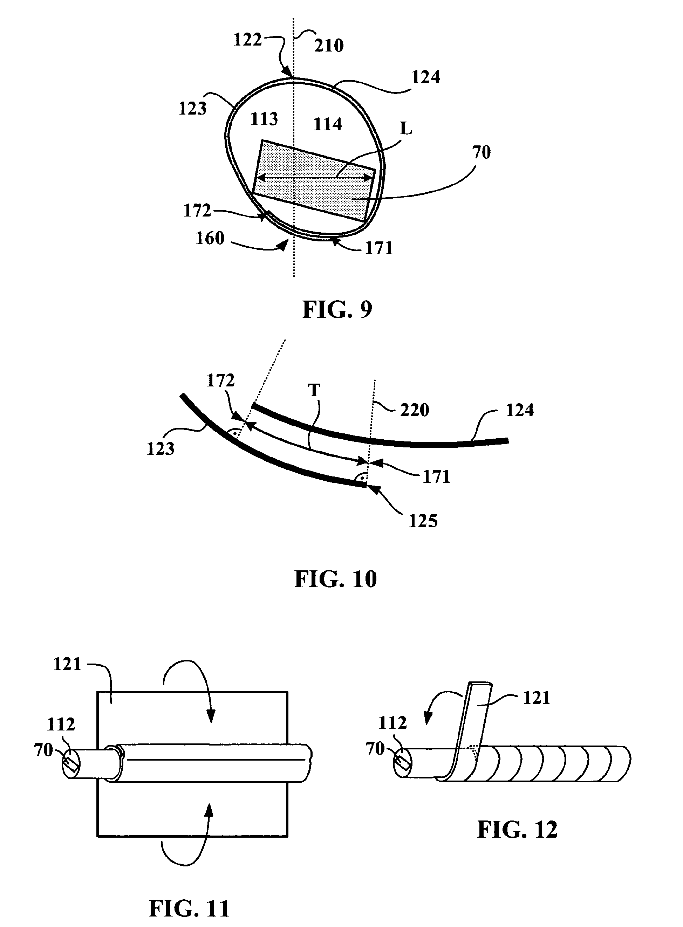

Une armature de contention 121 est pliée autour de l'ensemble formé par la tringle 70 et la gomme de rembourrage 112, l'armature de contention 121 étant située axialement entre le brin aller 61 et le brin retour 62 de l'armature de carcasse. Lorsqu'il est dit que l'armature de contention 121 est « pliée » autour de l'ensemble, il faut entendre par là qu'elle est pliée à la manière d'un papier de cigarette, comme cela est représenté à la figure 11 : l'armature de contention 121 est posée tout autour de l'ensemble formé par la tringle 70 et la gomme de rembourrage 112, et pliée autour de la circonférence. Ce mode de pliage est avantageux par rapport au tire-bouchonnage, connu en soi et représenté à la figure 12, où l'armature de contention 121 est enroulée en spirale sur tout le tour de l'ensemble formé par la tringle 70 et la gomme de rembourrage 112, de par sa plus grande rapidité de mise en oeuvre et son coût de revient industriel moindre.

Dans toute coupe radiale, lorsque le pneumatique est monté sur une jante appropriée (non représentée) et gonflé à sa pression de service, la section SE de l'ensemble formé par la tringle 70 et la gomme de rembourrage 112 (autrement dit, la section délimitée par l'armature de contention 121) est supérieure ou égale à 1.6 fois la section ST de la structure annulaire de renforcement. En l'occurrence, SE/ST = 2.8.

Précisons que, lorsque la structure annulaire de renforcement 70 est formée par une pluralité de fils enrobés dans du mélange caoutchouteux (comme c'est le cas à la figure 5), la section ST de la structure annulaire de renforcement est déterminée comme cela est représenté aux figures 7A à 7C. On fait abstraction de la gomme d'enrobage et on considère la trace des fils 72 formant la structure annulaire de renforcement, dans la coupe radiale (figure 7A). On place un élastique imaginaire 150 autour de la structure annulaire de renforcement (figure 7B), puis on laisse cet élastique imaginaire 150 se contracter (flèches à la figure 7B). La section ST de la structure annulaire de renforcement correspond à la section délimitée par l'élastique imaginaire 150 lorsque celui-ci s'est contracté au maximum (c'est-à-dire lorsque la longueur de la boucle est réduite à sa valeur minimale possible, compte tenu de la structure annulaire de renforcement), comme c'est représenté à la figure 7C.

La section SU de la portion de la gomme de rembourrage 112 formée par les points de la portion de la gomme de rembourrage 112 pour lesquels il existe au moins un point de la structure annulaire de renforcement ayant la même position axiale et une hauteur radiale inférieure, est supérieure ou égale à 20 % de la section ST de la structure annulaire de renforcement. Pour le mode de réalisation représenté à la figure 6, SU/ST = 0.9.

La section SD de la portion de la gomme de rembourrage 112 formée par les points de la portion de la gomme de rembourrage pour lesquels il existe au moins un point de la structure annulaire de renforcement ayant la même position axiale et une hauteur radiale supérieure, est supérieure ou égale à 20 % de la section ST de la structure annulaire de renforcement. Pour le mode de réalisation représenté à la figure 6, SD/ST = 0.36.

La section SO de la portion de la gomme de rembourrage 112 formée par les points de la portion de la gomme de rembourrage pour lesquels il existe au moins un point de la structure annulaire de renforcement ayant la même position radiale et se trouvant axialement à l'intérieur, est supérieure ou égale à 20 % de la section ST de la structure annulaire de renforcement. Pour le mode de réalisation représenté à la figure 6, SO/ST = 0.36.

Enfin, la section SI de la portion de la gomme de rembourrage 112 formée par les points de la portion de la gomme de rembourrage pour lesquels il existe au moins un point de la structure annulaire de renforcement ayant la même position radiale et se trouvant axialement à l'extérieur, est supérieure ou égale à 10 % de la section ST de la structure annulaire de renforcement. Pour le mode de réalisation représenté à la figure 6, SI/ST=0.18.

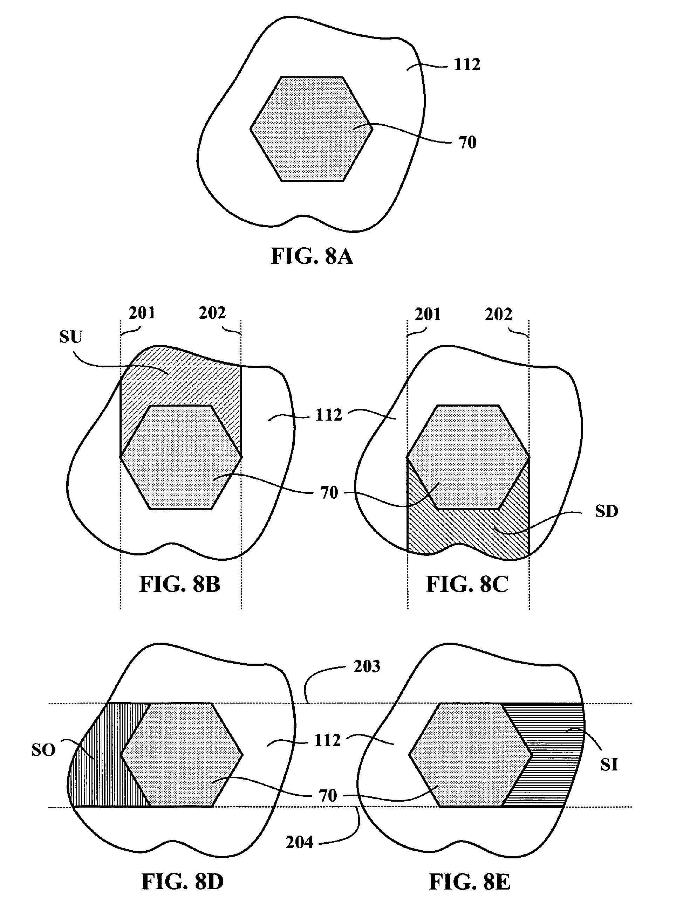

Pour ne pas surcharger la figure 6, les différentes sections n'ont pas été indiquées mais sont illustrées aux figures 8A à 8E, pour une structure annulaire de renforcement 70 et une gomme de rembourrage 112 arbitraires. Le plan médian 130 du pneumatique correspondant est supposé à la droite des figures, de sorte qu'un point P1 qui est plus à droite qu'un autre point P2 est axialement plus à l'intérieur que le point P2. L'axe du pneumatique est supposé en bas des figures, de sorte qu'un point P3 qui est plus haut qu'un autre point P4 est radialement plus à l'extérieur que le point P4.

Par définition, la section SU de la portion de la gomme de rembourrage 112 est formée par les points de la section de la portion de la gomme de rembourrage 112 pour lesquels il existe au moins un point de la structure annulaire de renforcement ayant la même position axiale et une hauteur radiale inférieure. On obtient donc cette section en traçant les directions radiales 201 et 202 passant par les extrémités axiales de la structure annulaire de renforcement 70 et en retenant la section de la partie de la gomme de rembourrage 112 qui est à la fois comprise entre les directions radiales 201 et 202 et radialement à l'extérieur de la structure annulaire de renforcement 70 (figure 8B). Par analogie, SD correspond à la section partie de la gomme de rembourrage 112 qui est à la fois comprise entre les directions radiales 201 et 202 et radialement à l'intérieur de la structure annulaire de renforcement 70 (figure 8C).

De même, par définition, la section SO de la portion de la gomme de rembourrage 112 est formée par les points de la section de la portion de la gomme de rembourrage pour lesquels il existe au moins un point de la structure annulaire de renforcement ayant la même position radiale et se trouvant axialement à l'intérieur. On obtient donc cette section en traçant les directions axiales 203 et 204 passant par les extrémités radiales de la structure annulaire de renforcement 70 et en retenant la section de la partie de la gomme de rembourrage 112 qui est à la fois comprise entre les directions axiales 203 et 204 et axialement à l'extérieur de la structure annulaire de renforcement 70 (figure 8D). Par analogie, SI correspond à la section partie de la gomme de rembourrage 112 qui est à la fois comprise entre les directions radiales 203 et 204 et axialement à l'intérieur de la structure annulaire de renforcement 70 (figure 8E).

La figure 9 représente l'armature de contention 121, la tringle 70 et la gomme de rembourrage 112 du bourrelet de la figure 6. L'armature de contention comporte une première portion 123 d'armature de contention s'étendant du point 122 radialement le plus à l'extérieur de l'armature de contention radialement vers l'intérieur, de manière à recouvrir au moins une partie 113 de la gomme de rembourrage axialement à l'extérieur de la direction radiale 210 passant par le point 122 radialement le plus à l'extérieur de l'armature de contention, et une deuxième portion 124 d'armature de contention s'étendant du point 122 radialement le plus à l'extérieur de l'armature de contention radialement vers l'intérieur, de manière à recouvrir au moins une partie 114 de la gomme de rembourrage axialement à l'intérieur de la direction radiale 210 passant par le point radialement le plus à l'extérieur de l'armature de contention, la première portion 123 et la deuxième portion 124 de l'armature de contention se rejoignant de sorte à former un recouvrement 160 radialement à l'intérieur de la structure annulaire de renforcement 70.

En l'occurrence, les deux extrémités 171 et 172 de la trace du recouvrement 160 sont situées radialement à l'intérieur du point radialement le plus à l'extérieur de la structure annulaire de renforcement. Il peut être avantageux de prévoir que les deux extrémités 171 et 172 soient situées radialement à l'intérieur du point radialement le plus à l'intérieur de la structure annulaire de renforcement.

La figure 10 illustre comment on obtient la « trace du recouvrement » on se place sur l'extrémité 125 radialement la plus à l'intérieur de l'armature de contention. On détermine la direction 220 perpendiculaire à ce point 125 de l'armature de contention et on considère le point 171 qui se trouve a mi-chemin entre les deux portions d'armature de contention. Ce point 171 forme l'une des extrémités de la trace du recouvrement. On suit ensuite la portion d'armature de contention comportant l'extrémité 125 radialement la plus à l'intérieur de l'armature de contention (ici, la portion 123). Pour chaque point de cette portion d'armature de contention, dans la zone de recouvrement, on trace le point qui se trouve a mi-chemin entre les deux portions d'armature de contention, dans une direction perpendiculaire à ladite portion d'armature de contention. Ainsi on obtient la trace T du recouvrement.

De préférence, la trace du recouvrement s'étend sur une longueur R entre deux extrémités, la longueur R satisfaisant à la condition L/4 ≤ R ≤ 3U2, et de préférence à la condition L/2 ≤ R ≤ L, L étant la dimension axiale maximale de la structure annulaire de renforcement 70 (voir figure 9). En l'occurrence, R/L = 0.65.

Les épaisseurs radiales moyennes des sections SU et SD et les épaisseurs axiales moyennes des sections SI et SO sont de préférence supérieures à 2 mm. Dans le mode de réalisation représenté à la figure 6, l'épaisseur radiale moyenne de la section SU est de 5 mm, celle de la section SD de 2 mm ; l'épaisseur axiale moyenne de la section SO est de 2 mm, celle de la section SI de 1 mm.

II est préférable d'avoir des épaisseurs radiales minimales des sections SU et SD et des épaisseurs axiales minimales des sections SI et SO supérieures à 0.5 mm, mais il n'est pas toujours possible d'éviter tout contact entre la tringle 70 et l'armature de contention 121 : dans le bourrelet représenté à la figure 6, il existe deux points de contact.

Comme cela est visible à la figure 9, dans la zone de recouvrement, à chaque position axiale, la deuxième portion d'armature de contention 124 est radialement à l'extérieur de la première portion d'armature de contention 123. Cet arrangement particulier comporte l'avantage que les efforts que l'armature de carcasse exerce sur la structure annulaire ont tendance à fermer l'armature de contention 121.

L'armature de contention 121 pliée autour de l'ensemble formé par la structure annulaire de renforcement 70 et la gomme de rembourrage 112 comporte au moins une pluralité d'éléments de renforcement filaires parallèles les uns aux autres et formant un angle alpha avec la direction circonférentielle, alpha étant supérieur ou égal à 45° et inférieur ou égal à 90°, en l'occurrence de 80°.

Le pneumatique représenté à la figure 6 a une bonne résistance de ce bourrelet au déroulement de l'armature de carcasse. Un essai réalisé avec cette solution sur un pneumatique de type 295/80R22.5 ayant une sculpture connue sous la désignation « XZA1 » en comparaison d'un témoin avec un bourrelet classique montre un gain kilométrique de 20% sur un test de déroulement carcasse sur jante chauffée. D'autre part, il a pu être constaté sur cet essai que le temps de réalisation d'une tringle avec la solution de pliage est réduit de moitié par rapport à une solution de type tire-bouchonnage. Enfin, un calcul par éléments finis comparant sur cette même dimension de pneumatique un bourrelet tel que défini dans le brevet US 6 820 670 et la solution proposée montre une réduction de 30% des efforts en cisaillement dans la zone située entre l'armature de carcasse et l'armature de contention.

## Revendications

1. Pneumatique (10), comportant:
- un sommet (25) comprenant une armature de sommet (80, 90), surmontée d'une bande de roulement (40) ;
- deux flancs (30) prolongeant le sommet radialement vers l'intérieur ;
- deux bourrelets (20) radialement intérieurs aux flancs et comportant chacun au moins une structure annulaire de renforcement (70) ayant une dimension axiale maximale L;
- une armature de carcasse ancrée dans chacun des bourrelets par un retournement autour de la structure annulaire de renforcement, de manière à former un brin aller (61) s'étendant depuis le sommet à travers le flanc jusque dans le bourrelet, et un brin retour (62) ;
- une gomme de rembourrage (112) entourant, dans toute coupe radiale, la structure annulaire de renforcement ;
- une armature de contention (121) pliée autour de l'ensemble formé par la structure annulaire de renforcement et la gomme de rembourrage, l'armature de contention étant située, dans toute coupe radiale, axialement entre le brin aller et le brin retour de l'armature de carcasse,
dans lequel, dans toute coupe radiale, lorsque le pneumatique est monté sur une jante appropriée et gonflé à sa pression de service :
- la section SE de l'ensemble formé par la structure annulaire de renforcement (70) et la gomme de rembourrage (112) est supérieure ou égale à 1.6 fois la section ST de la structure annulaire de renforcement ;
- la section SU de la portion de la gomme de rembourrage (112) formée par les points de la portion de la gomme de rembourrage (112) pour lesquels il existe au moins un point de la structure annulaire de renforcement (70) ayant la même position axiale et une hauteur radiale inférieure, est supérieure ou égale à 20 % de la section ST de la structure annulaire de renforcement ;
- la section SD de la portion de la gomme de rembourrage (112) formée par les points de la portion de la gomme de rembourrage (112) pour lesquels il existe au moins un point de la structure annulaire de renforcement (70) ayant la même position axiale et une hauteur radiale supérieure, est supérieure ou égale à 20 % de la section ST de la structure annulaire de renforcement ;
- la section SO de la portion de la gomme de rembourrage (112) formée par les points de la portion de la gomme de rembourrage (112) pour lesquels il existe au moins un point de la structure annulaire de renforcement (70) ayant la même position radiale et se trouvant axialement à l'intérieur, est supérieure ou égale à 20 % de la section ST de la structure annulaire de renforcement ;
- la section SI de la portion de la gomme de rembourrage (112) formée par les points de la portion de la gomme de rembourrage (112) pour lesquels il existe au moins un point de la structure annulaire de renforcement (70) ayant la même position radiale et se trouvant axialement à l'extérieur, est supérieure ou égale à 10 % de la section ST de la structure annulaire de renforcement ;
dans lequel l'armature de contention (121) comporte une première portion (123) d'armature de contention s'étendant du point (122) radialement le plus à l'extérieur de l'armature de contention radialement vers l'intérieur, de manière à recouvrir au moins une partie (113) de la gomme de rembourrage axialement à l'extérieur de la direction radiale (210) passant par le point (122) radialement le plus à l'extérieur de l'armature de contention, et une deuxième portion (124) d'armature de contention s'étendant du point (122) radialement le plus à l'extérieur de l'armature de contention radialement vers l'intérieur, de manière à recouvrir au moins une partie (114) de la gomme de rembourrage axialement à l'intérieur de la direction radiale (210) passant par le point (122) radialement le plus à l'extérieur de l'armature de contention, la première (123) et la deuxième portion (124) d'armature de contention se rejoignant de sorte à former un recouvrement (160), et dans lequel au moins une partie du recouvrement est radialement à l'intérieur de la structure annulaire de renforcement (70).

2. Pneumatique selon la revendication 1, dans lequel la section SU de la portion de la gomme de rembourrage (112) formée par les points de la portion de la gomme de rembourrage (112) pour lesquels il existe au moins un point de la structure annulaire de renforcement (70) ayant la même position axiale et une hauteur radiale inférieure, est supérieure ou égale à 50 % de la section ST de la structure annulaire de renforcement.

3. Pneumatique selon l'une quelconque des revendications 1 ou 2, dans lequel, dans toute coupe radiale, les deux extrémités (171, 172) de la trace (T) du recouvrement (160) sont situées radialement à l'intérieur du point radialement le plus à l'extérieur de la structure annulaire de renforcement (70).

4. Pneumatique selon la revendication 3, dans lequel, dans toute coupe radiale, les deux extrémités (171, 172) de la trace (T) du recouvrement (160) sont situées radialement à l'intérieur du point axialement le plus à l'intérieur de la structure annulaire de renforcement (70).

5. Pneumatique selon l'une quelconque des revendications 1 à 4, dans lequel la trace (T) du recouvrement (160) s'étend sur une longueur R entre deux extrémités (171, 172), la longueur R satisfaisant à la condition L/4 ≤ R ≤ 3U2.

6. Pneumatique selon la revendication 5, dans lequel la longueur R satisfait à la condition L/2 ≤ R ≤ L.

7. Pneumatique selon l'une quelconque des revendications 1 à 6, dans lequel l'épaisseur radiale moyenne des sections SU et SD et l'épaisseur axiale moyenne des sections SI et SO sont supérieures à 2 mm.

8. Pneumatique selon la revendication 7, dans lequel l'épaisseur radiale moyenne de la section SU est supérieure à 4 mm.

9. Pneumatique selon l'une quelconque des revendications 1 à 8, dans lequel l'épaisseur radiale minimale des sections SU et SD et l'épaisseur axiale minimale des sections SI et SO sont supérieures à 0.5 mm.

10. Pneumatique selon l'une quelconque des revendications 1 à 9, dans lequel, dans la zone de recouvrement (160), à chaque position axiale, la deuxième portion (124) d'armature de contention est radialement à l'extérieur de la première portion (123) d'armature de contention.

11. Pneumatique selon l'une quelconque des revendications 1 à 10, dans lequel l'armature de contention (121) pliée autour de l'ensemble formé par la structure annulaire de renforcement (70) et la gomme de rembourrage (112) comporte au moins une pluralité d'éléments de renforcement filaires parallèles les uns aux autres et formant un angle alpha avec la direction circonférentielle, alpha étant supérieur ou égal à 45° et inférieur ou égal à 90°.

12. Pneumatique selon la revendication 11, dans lequel l'angle alpha est supérieur ou égal à 65 °.

13. Pneumatique selon la revendication 11, dans lequel l'angle alpha est supérieur ou égal à 80 °.

14. Pneumatique selon l'une quelconque des revendications 1 à 13, adapté pour être monté sur une jante (5) à seat incliné.

## Claims

1. Tyre (10) comprising:
- a crown (25) comprising a crown reinforcement (80, 90), surmounted by a tread (40);
- two sidewalls (30) extending the crown radially inwards;
- two beads (20) radially internal to the sidewalls and each comprising at least one annular reinforcing structure (70) having a maximum axial dimension L;
- a carcass reinforcement anchored in each of the beads by a turn-up around the annular reinforcing structure so as to form an incoming portion (61) extending from the crown through the sidewall as far as the bead, and a turned-up portion (62);
- a cushion rubber (112) which, in any radial section, surrounds the annular reinforcing structure;
- a restraining reinforcement (121) folded around the assembly formed by the annular reinforcing structure and the cushion rubber, the restraining reinforcement being situated, in any radial section, axially between the incoming portion and the turned-up portion of the carcass reinforcement,
wherein, in any radial section, when the tyre is mounted on an appropriate rim and inflated to its service pressure:
- the cross section SE of the assembly formed by the annular reinforcing structure (70) and the cushion rubber (112) is greater than or equal to 1.6 times the cross section ST of the annular reinforcing structure;
- the cross section SU of that portion of the cushion rubber (112) that is formed by those points of the portion of the cushion rubber (112) for which there is at least one point on the annular reinforcing structure (70) that has the same axial position but a smaller radial height, is greater than or equal to 20% of the cross section ST of the annular reinforcing structure;
- the cross section SD of that portion of the cushion rubber (112) that is formed by those points of the portion of the cushion rubber (112) for which there is at least one point on the annular reinforcing structure (70) that has the same axial position but a greater radial height, is greater than or equal to 20% of the cross section ST of the annular reinforcing structure;
- the cross section SO of that portion of the cushion rubber (112) that is formed by those points of the portion of the cushion rubber (112) for which there is at least one point on the annular reinforcing structure (70) that has the same radial position but is situated axially on the inside, is greater than or equal to 20% of the cross section ST of the annular reinforcing structure;
- the cross section SI of that portion of the cushion rubber (112) that is formed by those points of the portion of the cushion rubber (112) for which there is at least one point on the annular reinforcing structure (70) that has the same radial position but is situated axially on the outside, is greater than or equal to 10% of the cross section ST of the annular reinforcing structure;
wherein the restraining reinforcement (121) comprises a first restraining reinforcement portion (123) extending from the radially outermost point (122) of the restraining reinforcement radially inwards, so as to cover at least part (113) of the cushion rubber axially on the outside of the radial direction (210) passing through the radially outermost point (122) of the restraining reinforcement, and a second restraining reinforcement portion (124) extending from the radially outermost point (122) of the restraining reinforcement radially inwards, so as to cover at least part (114) of the cushion rubber axially on the inside of the radial direction (210) passing through the radially outermost point (122) of the restraining reinforcement, the first (123) and second (124) restraining reinforcement portions meeting so as to form an overlap (160), and wherein at least part of the overlap is radially on the inside of the annular reinforcing structure (70).

2. Tyre according to Claim 1, wherein the cross section SU of that portion of the cushion rubber (112) that is formed by those points of the portion of the cushion rubber (112) for which there is at least one point on the annular reinforcing structure (70) that has the same axial position but a lower radial height, is greater than or equal to 50% of the cross section ST of the annular reinforcing structure.

3. Tyre according to either one of Claims 1 or 2, wherein, in any radial section, the two ends (171, 172) of the line (T) of the overlap (160) are situated radially on the inside of the radially outermost point of the annular reinforcing structure (70).

4. Tyre according to Claim 3, wherein, in any radial section, the two ends (171, 172) of the line (T) of the overlap (160) are situated radially on the inside of the axially innermost point of the annular reinforcing structure (70).

5. Tyre according to any one of Claims 1 to 4, wherein the line (T) of the overlap (160) extends over a length R between two ends (171, 172), the length R satisfying the condition L/4 ≤ R ≤ 3L/2.

6. Tyre according to Claim 5, wherein the length R satisfies the condition L/2 ≤ R ≤ L.

7. Tyre according to any one of Claims 1 to 6, wherein the mean radial thickness of the cross sections SU and SD and the mean axial thickness of the cross sections SI and SO are greater than 2 mm.

8. Tyre according to Claim 7, wherein the mean radial thickness of the cross section SU is greater than 4 mm.

9. Tyre according to any one of Claims 1 to 8, wherein the minimum radial thickness of the cross sections SU and SD and the minimum axial thickness of the cross sections SI and SO are greater than 0.5 mm.

10. Tyre according to any one of Claims 1 to 9, wherein, in the region of overlap (160), in each axial position, the second restraining reinforcement portion (124) is radially on the outside of the first restraining reinforcement portion (123).

11. Tyre according to any one of Claims 1 to 10, wherein the restraining reinforcement (121) folded around the assembly formed by the annular reinforcing structure (70) and the cushion rubber (112) comprises at least one plurality of mutually parallel filamentary reinforcing elements making an angle alpha with the circumferential direction, alpha being greater than or equal to 45° and less than or equal to 90°.

12. Tyre according to Claim 11, wherein the angle alpha is greater than or equal to 65°.

13. Tyre according to Claim 11, wherein the angle alpha is greater than or equal to 80°.

14. Tyre according to any one of Claims 1 to 13, designed to be mounted on a tapered bead seat rim (5).

## Patentansprüche

1. Luftreifen (10), der aufweist:
- einen Scheitel (25), der eine Scheitelbewehrung (80, 90) enthält, die von einem Laufstreifen (40) überdeckt wird;
- zwei Flanken (30), die den Scheitel radial nach innen verlängern;
- zwei Wülste (20), die bezüglich der Flanken radial innen liegen und je mindestens eine ringförmige Verstärkungsstruktur (70) aufweisen, die eine maximale axiale Abmessung L hat;
- eine Karkassenbewehrung, die in jedem der Wülste durch einen Umschlag um die ringförmige Verstärkungsstruktur verankert ist, um einen Vorlauf-Einzeldraht (61), der sich vom Scheitel durch die Flanke bis in den Wulst erstreckt, und einen Rücklauf-Einzeldraht (62) zu formen;
- einen Polstergummi (112), der in jedem Radialschnitt die ringförmige Verstärkungsstruktur umgibt;
- eine Rückhaltebewehrung (121), die um die von der ringförmigen Verstärkungsstruktur und dem Polstergummi geformte Einheit gerollt ist, wobei die Rückhaltebewehrung sich in jedem Radialschnitt axial zwischen dem Vorlauf-Einzeldraht und dem Rücklauf-Einzeldraht der Karkassenbewehrung befindet,
wobei in jedem Radialschnitt, wenn der Luftreifen auf eine geeignete Felge montiert und auf seinen Betriebsdruck aufgepumpt ist:
- der Querschnitt SE der von der ringförmigen Verstärkungsstruktur (70) und dem Polstergummi (112) gebildeten Einheit größer als das oder gleich dem 1,6-Fachen des Querschnitts ST der ringförmigen Verstärkungsstruktur ist;
- der Querschnitt SU des Teils des Polstergummis (112), der von den Punkten des Teils des Polstergummis (112) geformt wird, für die es mindestens einen Punkt der ringförmigen Verstärkungsstruktur (70) gibt, der die gleiche axiale Stellung und eine geringere radiale Höhe hat, gleich oder größer als 20 % des Querschnitts ST der ringförmigen Verstärkungsstruktur ist;
- der Querschnitt SD des Teils des Polstergummis (112), der von den Punkten des Teils des Polstergummis (112) geformt wird, für die es mindestens einen Punkt der ringförmigen Verstärkungsstruktur (70) gibt, der die gleiche axiale Stellung und eine höhere radiale Höhe hat, größer als oder gleich 20 % des Querschnitts ST der ringförmigen Verstärkungsstruktur ist;
- der Querschnitt SO des Teils des Polstergummis (112), der von den Punkten des Teils des Polstergummis (112) geformt wird, für die es mindestens einen Punkt der ringförmigen Verstärkungsstruktur (70) gibt, der die gleiche radiale Stellung hat und sich axial innen befindet, größer als oder gleich 20 % des Querschnitts ST der ringförmigen Verstärkungsstruktur ist;
- der Querschnitt SI des Teils des Polstergummis (112), der von den Punkten des Teils des Polstergummis (112) geformt wird, für die es mindestens einen Punkt der ringförmigen Verstärkungsstruktur (70) gibt, der die gleiche radiale Stellung hat und sich axial außen befindet, größer als oder gleich 10 % des Querschnitts ST der ringförmigen Verstärkungsstruktur ist;
wobei die Rückhaltebewehrung (121) einen ersten Rückhaltebewehrungsteil (123), der sich von dem radial am weitesten außen liegenden Punkt (122) der Rückhaltebewehrung radial nach innen erstreckt, um mindestens einen Bereich (113) des Polstergummis axial außerhalb der radialen Richtung (210) zu bedecken, die durch den radial am weitesten außen liegenden Punkt (122) der Rückhaltebewehrung geht, und einen zweiten Rückhaltebewehrungsteil (124) aufweist, der sich von dem radial am weitesten außen liegenden Punkt (122) der Rückhaltebewehrung radial nach innen erstreckt, um mindestens einen Bereich (114) des Polstergummi axial innerhalb der radialen Richtung (210) zu bedecken, die durch den radial am weitesten außen liegenden Punkt (122) der Rückhaltebewehrung geht, wobei der erste (123) und der zweite Rückhaltebewehrungsteil (124) sich vereinigen, um eine Überlappung (160) zu formen, und wobei mindestens ein Bereich der Überlappung sich radial innerhalb der ringförmigen Verstärkungsstruktur (70) befindet.

2. Luftreifen nach Anspruch 1, wobei der Querschnitt SU des Teils des Polstergummis (112), der von den Punkten des Teils des Polstergummis (112) geformt wird, für die es mindestens einen Punkt der ringförmigen Verstärkungsstruktur (70) gibt, der die gleiche axiale Stellung und eine geringere radiale Höhe hat, größer als oder gleich 50 % des Querschnitts ST der ringförmigen Verstärkungsstruktur ist.

3. Luftreifen nach einem der Ansprüche 1 oder 2, wobei in jedem Radialschnitt die zwei Enden (171, 172) des Verlaufs (T) der Überlappung (160) sich radial innerhalb des radial am weitesten außen liegenden Punkts der ringförmigen Verstärkungsstruktur (70) befinden.

4. Luftreifen nach Anspruch 3, wobei in jedem Radialschnitt die zwei Enden (171, 172) des Verlaufs (T) der Überlappung (160) sich radial innerhalb des axial am weitesten innen liegenden Punkts der ringförmigen Verstärkungsstruktur (70) befinden.

5. Luftreifen nach einem der Ansprüche 1 bis 4, wobei der Verlauf (T) der Überlappung (160) sich über eine Länge R zwischen zwei Enden (171, 172) erstreckt, wobei die Länge R die Bedingung L/4 ≤ R ≤ 3L/2 erfüllt.

6. Luftreifen nach Anspruch 5, wobei die Länge R die Bedingung L/2 ≤ R ≤ L erfüllt.

7. Luftreifen nach einem der Ansprüche 1 bis 6, wobei die mittlere radiale Dicke der Querschnitte SU und SD und die mittlere axiale Dicke der Querschnitte SI und SO größer als 2 mm sind.

8. Luftreifen nach Anspruch 7, wobei die mittlere radiale Dicke des Querschnitts SU größer als 4 mm ist.

9. Luftreifen nach einem der Ansprüche 1 bis 8, wobei die minimale radiale Dicke der Querschnitte SU und SD und die minimale axiale Dicke der Querschnitte SI und SO größer als 0,5 mm sind.

10. Luftreifen nach einem der Ansprüche 1 bis 9, wobei in der Überlappungszone (160) in jeder axialen Stellung der zweite Rückhaltebewehrungsteil (124) radial außerhalb des ersten Rückhaltebewehrungsteils (123) liegt.

11. Luftreifen nach einem der Ansprüche 1 bis 10, wobei die um die von der ringförmigen Verstärkungsstruktur (70) und dem Polstergummi (112) geformte Einheit gerollte Rückhaltebewehrung (121) mindestens eine Vielzahl von fadenförmigen Verstärkungselementen aufweist, die parallel zueinander sind und einen Winkel Alpha mit der Umfangsrichtung formen, wobei Alpha größer als oder gleich 45° und kleiner als oder gleich 90° ist.

12. Luftreifen nach Anspruch 11, wobei der Winkel Alpha größer als oder gleich 65° ist.

13. Luftreifen nach Anspruch 11, wobei der Winkel Alpha größer als oder gleich 80° ist.

14. Luftreifen nach einem der Ansprüche 1 bis 13, der geeignet ist, um auf eine Felge (5) mit geneigtem Seat montiert zu werden.
